# EUROPÄISCHE PATENTSCHRIFT

(11) **EP 2 108 215 B1**
(45) Veröffentlichungstag und Bekanntmachung des Hinweises auf die Patenterteilung: **29.04.2015**
(21) Anmeldenummer: 07856336.8
(22) Anmeldetag: 01.12.2007
(51) Int. Cl.: H02K 33/16, A61C 17/34

(54) **ANTRIEBSVORRICHTUNG ZUM ANTREIBEN EINES BÜRSTENELEMENTS EINER ELEKTRISCHEN ZAHNBÜRSTE**
DRIVE DEVICE FOR DRIVING A BRUSH ELEMENT OF AN ELECTRIC TOOTHBRUSH
DISPOSITIF D'ENTRAÎNEMENT SERVANT À ENTRAÎNER UN ÉLÉMENT DE BROSSAGE DE BROSSE À DENTS ÉLECTRIQUE

(30) Priorität: 23.12.2006 DE 102006061381
(43) Veröffentlichungstag der Anmeldung: 14.10.2009
(73) Patentinhaber: Braun GmbH, 61476 Kronberg/Taunus (DE)
(72) Erfinder: JUNGNICKEL, Uwe, 61462 Königstein/Taunus (DE); HEIL, Benedikt, 61239 Ober-Mörlen (DE); NEYER, Christian, 65760 Eschborn (DE); KRAUS, Bernhard, 35619 Braunfels (DE)
(74) Vertreter: Schneider, Stefan Michael
(86) Internationale Anmeldenummer: PCT/EP2007/010443
(87) Internationale Veröffentlichungsnummer: WO 2008/077454

(56) Entgegenhaltungen:
- DE-A1- 10 355 446
- US-A- 5 189 751
- US-A1- 2002 163 701

## Beschreibung

Die Erfindung bezieht sich auf eine Antriebsvorrichtung zum Antreiben eines Bürstenelements einer elektrischen Zahnbürste. Weiterhin bezieht sich die Erfindung auf eine elektrische Zahnbürste mit einer derartigen Antriebsvorrichtung.

Aus der EP 1 193 844 A1 ist ein linearer Oszillator bekannt, bei dem in einem als ein Stator ausgebildeten Gehäuse ein Läufer angeordnet ist, der eine hin- und hergehende Bewegung ausführt. In dem Gehäuse ist weiterhin eine Spindel zur Steuerung der Schwingungsamplitude des Läufers beweglich angeordnet. Der Läufer und die Spindel sind mittels Federn untereinander und mit dem Gehäuse gekoppelt. Die Kopplung des Läufers mit dem Gehäuse kann insbesondere mittels einer Schraubenfeder erfolgen, wobei ein Ende der Schraubenfeder am Gehäuse und das andere Ende am Läufer befestigt ist. Bei dieser Anordnung übt die Feder beim Stauchen und Strecken nicht nur eine Kraft in Axialrichtung aus, sondern verdreht den Läufer jeweils geringfügig, so daß eine oszillierende Drehbewegung entsteht, insbesondere, wenn die Anregung mit der Resonanzfrequenz der oszillierenden Drehbewegung erfolgt. Die so erzeugte oszillierende Drehbewegung ist mit der linearen Schwingungsbewegung gekoppelt und setzt zwingend voraus, daß die lineare Schwingungsbewegung angeregt wird. Außerdem weist die oszillierende Drehbewegung stets die gleiche Frequenz wie die lineare Schwingungsbewegung auf, so daß die Variationsmöglichkeiten sehr begrenzt sind.

Aus der DE 103 55 446 A1 ist ein Elektromotor für ein elektrisches Kleingerät bekannt, der eine Magnetanordnung mit wenigstens einem Permanentmagneten und eine Spule zur Erzeugung eines Magnetfelds aufweist. Das Magnetfeld erzeugt in Wechselwirkung mit der Magnetanordnung eine Kraft zur Anregung einer linearen Schwingungsbewegung und ein Drehmoment zur Anregung einer rotatorischen Schwingungsbewegung. Die lineare Schwingungsbewegung kann parallel oder senkrecht zur Achse der rotatorischen Schwingungsbewegung orientiert sein.

Aus der US 2002/163701 A1 ist ein Gerät bekannt, das zum Bewegen eines Spiegels eingesetzt wird. Dabei ist ein Magnet an einer mittels ebener Spiralfedern gelagerten Welle angeordnet. Die Spiralfedern erlauben eine Bewegung der Welle um einen Mittelpunkt entlang der Längsrichtung der Welle, der sich zwischen den Spiralfedern befindet. Radial um den Magneten herum ist eine Ringspule angeordnet, die ein magnetisches Feld erzeugen kann, das mit dem Magneten wechselwirken kann. Die Welle kann zu oszillierenden Bewegungen im Wesentlichen entlang eines Doppelkegels um den Mittelpunkt herum angeregt werden und die Welle kann zu wippenden Stocherbewegungen um den Mittelpunkt herum angeregt werden.

Aus der US5 189 751 A ist eine schwingende Zahnbürste mit magnetischem Antrieb bekannt, bei der ein Hebelarm um einen einzelnen festen Anlenkpunkt schwingen kann, wobei die Antriebseinrichtung Permanentmagneteinrichtungen, die sich an einem Ende des Hebelarms befinden, sowie einen Elektromagneten, der von den Permanentmagneteinrichtungen beabstandet ist, aufweist, wobei zwischen der Antriebseinrichtung und dem Hebelarm keine direkte mechanische Verbindung vorhanden ist, wobei der Elektromagnet eine elektromagnetische Spule für die Aufnahme eines Wechselstrom-Treibersignals hat, wobei der Strom durch den Elektromagneten während eines Halbzyklus eine Bewegung des Hebelarms um den Anlenkpunkt in einer Richtung zur Folge hat, wahrend der Strom durch den Elektromagneten während des anderen Halbzyklus eine Bewegung des Hebelarms um den Anlenkpunkt in der entgegengesetzten Richtung zur Folge hat.

Der Erfindung liegt die Aufgabe zugrunde ein Bürstenelement einer elektrischen Zahnbürste auf möglichst optimale Weise anzutreiben.

Diese Aufgabe wird durch eine Antriebsvorrichtung mit der Merkmalskombination des Anspruchs 1 sowie durch eine elektrische Zahnbürste mit der Merkmalskombination des Anspruchs 12 gelöst.

Die erfindungsgemäße Antriebsvorrichtung zum Antreiben eines Bürstenelements einer elektrischen Zahnbürste weist eine erste Antriebskomponente zur Erzeugung eines Magnetfelds und eine zweite Antriebskomponente auf, die durch Einwirkung des Magnetfelds sowohl translatorisch als auch rotatorisch antreibbar ist. Weiterhin weist die erfindungsgemäße Antriebsvorrichtung ein aus einer vorgegebenen Position auslenkbares Übertragungselement zur Übertragung einer translatorischen und einer rotatorischen Bewegung der zweiten Antriebskomponente entlang einer Längsachse des Übertragungselements auf das Bürstenelement auf. Eine Eigenschaft der Antriebsvorrichtung besteht darin, daß die Auslenkung des Übertragungselements aus der vorgegebenen Position entlang der Längsachse des Übertragungselements variiert. Dies bedeutet, daß im Betriebszustand der erfindungsgemäßen Antriebsvorrichtung die Auslenkung des Übertragungselements nicht über die gesamte Längsachse des Übertragungselements durchgehend den gleichen Wert aufweist, sondern daß entlang der Längsachse Stellen vorhanden sind, an denen die Auslenkung des Übertragungselements unterschiedliche Werte aufweist. Erfindungsgemäß ist die zweite Antriebskomponente axial neben der ersten Antriebskomponente angeordnet. Dies hat den Vorteil, daß die translatorische Bewegung der zweiten Antriebskomponente in Radialrichtung nicht durch die erste Antriebskomponente beeinträchtigt wird. Vorzugsweise weist die erste Antriebskomponente eine Spule auf. Da sich die erste Antriebskomponente allenfalls geringfügig bewegt, wirkt sich eine zur Bestromung der Spule erforderliche Verkabelung nicht störend aus. Weiterhin kann die erste Antriebskomponente eine Polschuhanordnung mit einem inneren Polschuhelement und einem äußeren Polschuhelement aufweisen, welches das innere Polschuhelement radial umschließt. Auf diese Weise kann eine günstige Feldverteilung des von der ersten Antriebskomponente erzeugten Magnetfelds ausgebildet und dadurch die gewünschten Bewegungen sehr effizient erzeugt werden. Die zweite Antriebskomponente weist vorzugsweise wenigstens einen Permanentmagneten auf. Dies hat den Vorteil, daß keine Verkabelung der zweiten Antriebskomponente erforderlich ist. Die erste Antriebskomponente und die zweite Antriebskomponente sind bevorzugt innerhalb eines Gehäuses aus einem ferromagnetischen Material angeordnet. Auf diese Weise können magnetische Streufelder wirksam abgeschirmt werden.

Die Erfindung hat den Vorteil, daß mit einem vergleichsweise geringen Aufwand eine rotatorische und eine translatorische Bewegung erzeugt und auf das Bürstenelement übertragen werden kann. Dabei ist es besonders vorteilhaft, daß die Antriebsvorrichtung als Direktantrieb ausgebildet ist und die rotatorische und translatorische Bewegung direkt durch die Einwirkung des Magnetfelds auf die zweite Antriebskomponente erzeugt. Es ist somit kein Getriebe erforderlich, das aus einer rotatorischen Bewegung eine translatorische Bewegung oder umgekehrt aus einer translatorischen Bewegung eine rotatorische Bewegung erzeugt.

Weitere Vorteile bestehen darin, daß für die Lagerung der beweglichen Komponenten der Antriebsvorrichtung keine Wälz- oder Gleitlager erforderlich sind und daß mit der Antriebsvorrichtung eine große Bandbreite von Bewegungsmustern erzeugbar ist, wobei allenfalls geringfügige bauliche Veränderungen an der Antriebsvorrichtung vorgenommen werden müssen. Außerdem ist es von Vorteil, daß durch die Antriebsvorrichtung kaum unerwünschte Vibrationen erzeugt werden.

Die vorgegebene Position des Übertragungselements entspricht vorzugsweise einer Gleichgewichtslage, die das Übertragungselement ohne die Einwirkung des Magnetfelds auf die zweite Antriebskomponente dauerhaft einnimmt. Die Antriebsvorrichtung kann so konstruiert sein, daß die Einwirkung des Magnetfelds auf die zweite Antriebskomponente in der Gleichgewichtslage einen Maximalwert aufweist. Eine von außen einwirkende Kraft, die beispielsweise durch den Anpreßdruck des Bürstenelements beim Zähneputzen entstehen kann, hätte dann eine Verschiebung des Übertragungselements und damit eine Reduzierung der Antriebskraft der Antriebsvorrichtung zur Folge. Ebenso ist es jedoch auch möglich, die Antriebsvorrichtung so auszubilden, daß die Gleichgewichtslage außerhalb einer Position des Übertragungselements angeordnet ist, in der die Einwirkung des Magnetfelds auf die zweite Antriebskomponente einen Maximalwert aufweist. Eine derartige Ausbildung der Antriebsvorrichtung hat den Vorteil, daß die Antriebskraft der Antriebsvorrichtung zunächst mit steigendem Anpreßdruck des Bürstenelements zunimmt und somit ein Einbrechen der Bewegung des Bürstenelements bei steigendem Anpreßdruck verhindert wird.

Bei einem bevorzugten Ausführungsbeispiel der Antriebsvorrichtung führt wenigstens eine axiale Stelle des Übertragungselements bei der Übertragung der translatorischen und der rotatorischen Bewegung der zweiten Antriebskomponente ausschließlich eine rotatorische Bewegung aus. Dies hat den Vorteil, daß durch eine Aufhängung des Übertragungselements an einer derartigen axialen Stelle die Übertragung unerwünschter Vibrationen sehr gering gehalten werden kann.

Die Antriebsvorrichtung ist vorzugsweise so ausgebildet, daß eine quer zur Längsachse des Übertragungselements orientierte Komponente der Auslenkung des Übertragungselements aus der vorgegebenen Position entlang der Längsachse des Übertragungselements linear oder abhängig von einer nichtlinearen Funktion variiert. Ebenso ist es möglich, daß die Auslenkung des Übertragungselements aus der vorgegebenen Position zur gleichen Zeit innerhalb eines ersten Bereichs entlang der Längsachse des Übertragungselements eine erste Richtung und innerhalb eines zweiten Bereichs entlang der Längsachse des Übertragungselements eine zur ersten Richtung entgegen gesetzte zweite Richtung aufweist.

Besonders vorteilhaft ist es, wenn das Übertragungselement zu einer translatorischen und zu einer rotatorischen Schwingung anregbar ist. Damit ist eine hohe Effizienz der Antriebsvorrichtung erreichbar. Die translatorische und die rotatorische Schwingung weisen vorzugsweise unterschiedliche Resonanzfrequenzen auf. Dies hat den Vorteil, daß eine selektive Anregung der translatorischen und der rotatorischen Schwingung möglich ist. Insbesondere kann das Übertragungselement zu einer Pendelschwingung um eine Pendelachse anregbar sein, die quer zur Längsachse des Übertragungselements verläuft. Auf diese Weise lassen sich relativ große Auslenkungen erzeugen und es ist über die Wahl der axialen Position der Pendelachse sehr einfach, ein gewünschtes Übersetzungs- oder Untersetzungsverhältnis für die Übertragung der Bewegung der zweiten Antriebskomponente zum Bürstenelement zu realisieren. Ebenso ist es auch möglich, daß das Übertragungselement zu einer Biegeschwingung quer zur Längsachse des Übertragungselements anregbar ist. Damit lassen sich relativ hohe Schwingungsfrequenzen erreichen und es ist nur eine vergleichsweise geringe Antriebskraft erforderlich. Über die Anpassung der Steifigkeit des Übertragungselements inklusive des Bürstenelements kann zudem ein gewünschtes Übersetzungs- oder Untersetzungsverhältnis vorgegeben werden. Ein weiterer Vorteil besteht darin, daß bereits innerhalb des Übertragungselements ein Ausgleich der schwingenden Massen erfolgt und somit kaum unerwünschte Vibrationen erzeugt werden. Besonders vorteilhaft ist es, wenn das Übertragungselement wahlweise zu der Pendelschwingung oder zu der Biegeschwingung anregbar ist. Dadurch wird die Möglichkeit geschaffen, zwischen unterschiedlichen Bewegungsmustern auszuwählen und somit eine individuelle Adaption eines bevorzugten Bewegungsmusters seitens des Benutzers der elektrischen Zahnbürste zuzulassen.

Die Antriebsvorrichtung weist wenigstens eine Aufhängung zur Unterstützung des Übertragungselements auf, welche die rotatorische und/oder die translatorische Schwingung des Übertragungselements ermöglicht. Vorzugsweise sind für die rotatorische und die translatorische Schwingung des Übertragungselements unterschiedliche Aufhängungen vorgesehen. Dies hat den Vorteil daß, die Aufhängungen optimal auf die jeweiligen Schwingungsbewegungen abgestimmt werden können und die Belastung pro Aufhängung gering ist. In einem bevorzugten Ausführungsbeispiel der Antriebsvorrichtung ist die Aufhängung im Bereich der Pendelachse des Übertragungselements oder im Bereich eines Schwingungsknotens des Übertragungselements angeordnet. Dort ist die Belastung der Aufhängung am geringsten und es kommt allenfalls in einem sehr geringen Umfang zu einer Übertragung unerwünschter Vibrationen über die Aufhängung. Weiterhin besteht die Möglichkeit, daß die Aufhängung im Bereich eines axialen Endes des Übertragungselements angeordnet ist. Besonders vorteilhaft ist es, wenn wenigstens eine Aufhängung als ein elastisches Element ausgebildet ist oder ein elastisches Element aufweist. Eine derartige Aufhängung ist kostengünstig realisierbar und unterliegt keinem nennenswerten Verschleiß. Außerdem läßt sich die Reibung sehr gering halten. Ein weiterer Vorteil besteht darin, daß eine derartige Aufhängung zugleich als rückstellendes Element für die Schwingungsbewegung des Übertragungselements verwendet werden kann. Insbesondere können alle Aufhängungen als elastische Elemente ausgebildet sein oder ein elastisches Element aufweisen. In diesem Fall kann der Aufwand für Wälz- oder Gleitlager zur Unterstützung des Übertragungselements vollständig eingespart werden.

Das Übertragungselement kann einen Koppelbereich zum Ankoppeln des Bürstenelements aufweisen. Dabei ist es von Vorteil, wenn das Verhältnis der Schwingungsamplituden zwischen der translatorischen und der rotatorischen Schwingung des Übertragungselements im Koppelbereich des Übertragungselements variierbar ist. Dies ermöglicht die individuelle Einstellung eines gewünschten Bewegungsmusters durch den Benutzer der elektrischen Zahnbürste. In einem bevorzugten Ausführungsbeispiel der Antriebsvorrichtung gibt der Koppelbereich durch seine Form die Orientierung des Bürstenelements relativ zum Übertragungselement so vor, daß am Bürstenelement angeordnete Borsten einen spitzen Winkel mit der Auslenkungsrichtung der translatorischen Schwingung des Übertragungselements einschließen. Dadurch läßt sich mit der elektrischen Zahnbürste eine hohe Reinigungswirkung erzielen.

Das Übertragungselement ist vorzugsweise drehfest mit der zweiten Antriebskomponente verbunden. Insbesondere ist das Übertragungselement starr mit der zweiten Antriebskomponente verbunden. Dadurch kann mit geringem Aufwand eine zuverlässige Übertragung der Bewegung der zweiten Antriebskomponente auf das Übertragungselement gewährleistet werden. Das Übertragungselement ist beispielsweise als eine Welle ausgebildet.

Die Erfindung betrifft weiterhin eine elektrische Zahnbürste, welche eine der vorstehend beschriebenen Antriebsvorrichtungen zum Antreiben des Bürstenelements aufweist.

Beim Verfahren zum Betreiben einer Antriebsvorrichtung einer elektrischen Zahnbürste wird von einer ersten Antriebskomponente ein Magnetfeld erzeugt. Eine zweite Antriebskomponente wird durch Einwirkung des Magnetfelds in eine translatorische und in eine rotatorische Bewegung versetzt. Die translatorische und die rotatorische Bewegung der zweiten Antriebskomponente wird durch Auslenkung eines Übertragungselements aus einer vorgegebenen Position entlang einer Längsachse des Übertragungselements auf ein Bürstenelement übertragen. Das Verfahren zeichnet sich dadurch aus, daß die Auslenkung des Übertragungselements aus der vorgegebenen Position entlang der Längsachse des Übertragungselements variiert wird.

Die einzelnen Merkmale der Erfindung können auch in anderer Weise miteinander kombiniert werden, als vorstehend dargelegt ist und im folgenden anhand von Ausführungsbeispielen im einzelnen beschrieben wird. Außerdem kann die Erfindung auch bei Zahnbürsten eingesetzt werden, die andersartig aufgebaut sind, als dies im folgenden beschrieben ist.

Die Erfindung wird nachstehend anhand der in der Zeichnung dargestellten Ausführungsbeispiele näher erläutert.

Es zeigen:
- Fig. 1: ein Ausführungsbeispiel einer erfindungsgemäß ausgebildeten elektrischen Zahnbürste in perspektivischer Darstellung,
- Fig. 2: das in Fig. 1 dargestellte Ausführungsbeispiel der elektrischen Zahnbürste in Seitenansicht,
- Fig. 3: ein Ausführungsbeispiel für die Lagerung der Welle in perspektivischer Darstellung,
- Fig. 4: die gemäß Fig. 3 gelagerte Welle für einen ersten Schwingungszustand in Seitenansicht,
- Fig. 5: die gemäß Fig. 3 gelagerte Welle für einen zweiten Schwingungszustand in Seitenansicht,
- Fig. 6: ein Ausführungsbeispiel für einen Federträger zur Aufnahme der ersten Feder und der zweiten Feder in perspektivischer Darstellung,
- Fig. 7: ein Ausführungsbeispiel für das Schwingungssystem in perspektivischer Darstellung,
- Fig. 8: ein Ausführungsbeispiel für einen Satz Blattfedermodule in perspektivischer Ansicht,
- Fig. 9: eine erste Prinzipdarstellung des Elektromotors,
- Fig. 10: eine zweite Prinzipdarstellung des Elektromotors,
- Fig. 11: eine dritte Prinzipdarstellung des Elektromotors,
- Fig. 12: ein Ausführungsbeispiel für den Elektromotor in perspektivischer Darstellung,
- Fig. 13: ein weiteres Ausführungsbeispiel für den Elektromotor in perspektivischer Darstellung,
- Fig. 14: die Polschuhanordnung des in Fig. 12 dargestellten Ausführungsbeispiels des Elektromotors in Aufsicht,
- Fig. 15: die Magnetanordnung des in Fig. 12 dargestellten Ausführungsbeispiels des Elektromotors in einer perspektivischen Darstellung,
- Fig. 16: das in Fig. 13 dargestellte Ausführungsbeispiel des Elektromotors ohne die Magnetanordnung und ohne die Polschuhanordnung in perspektivischer Darstellung,
- Fig. 17: die Polschuhanordnung des in Fig. 16 dargestellten Ausführungsbeispiels des Elektromotors in perspektivischer Darstellung und
- Fig. 18: die Magnetanordnung des in Fig. 16 dargestellten Ausführungsbeispiels des Elektromotors in einer perspektivischen Darstellung.

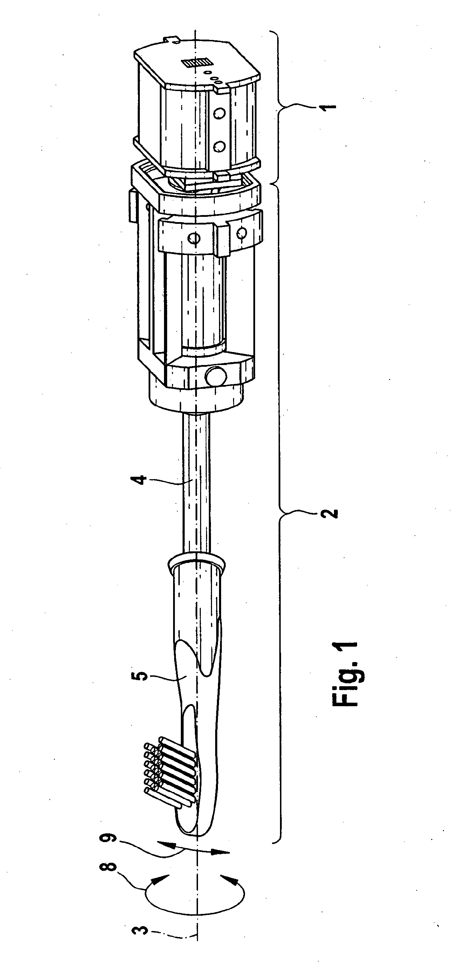

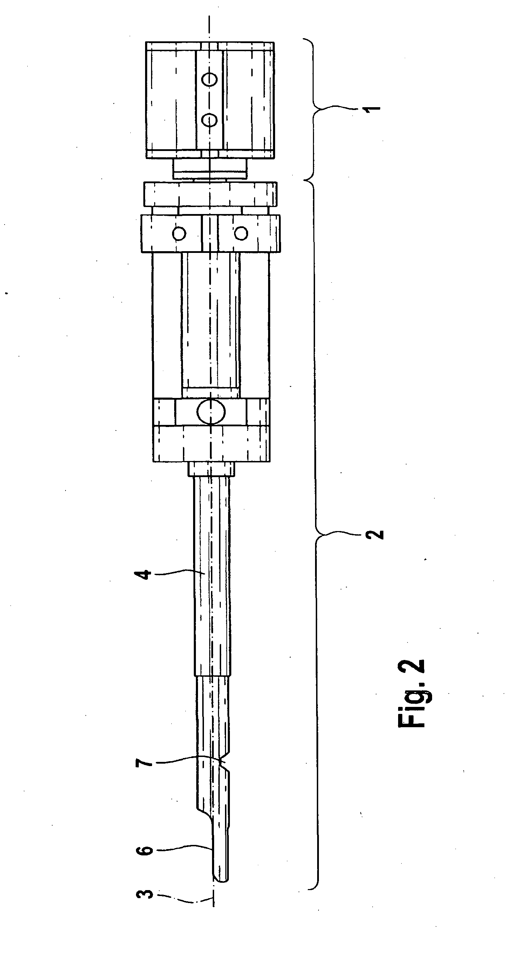

Fig. 1 zeigt ein Ausführungsbeispiel einer erfindungsgemäß ausgebildeten elektrischen Zahnbürste in perspektivischer Darstellung. Fig. 2 zeigt das in Fig. 1 dargestellte Ausführungsbeispiel der elektrischen Zahnbürste in Seitenansicht.

Die elektrische Zahnbürste ist jeweils ohne Gehäuse dargestellt, um den Blick auf die innerhalb des Gehäuses angeordneten Komponenten freizugeben. Die elektrische Zahnbürste weist einen Elektromotor 1 und ein Schwingungssystem 2 auf, die entlang einer gemeinsamen Längsachse 3 axial benachbart zueinander angeordnet sind. Das Schwingungssystem 2 weist insbesondere eine Welle 4 auf, auf die eine Aufsteckbürste 5 aufgesteckt ist. Die Aufsteckbürste 5 ist lediglich in Fig. 1 dargestellt. In Fig. 2 ist die elektrische Zahnbürste ohne die Aufsteckbürste 5 dargestellt, so daß der Bereich der Welle 4 sichtbar ist, der die Aufsteckbürste 5 aufnimmt. Innerhalb dieses Bereichs sind eine Abflachung 6 und eine Vertiefung 7 ausgebildet, die der drehfesten und axialen Fixierung der Aufsteckbürste 5 auf der Welle 4 dienen. Die weiteren Komponenten des Schwingungssystems 2 und die Komponenten des Elektromotors 1 werden im folgenden noch näher beschrieben.

Der Elektromotor 1 dient dazu, das Schwingungssystem 2 in einen definierten Schwingungszustand zu versetzen. Dabei kann insbesondere eine rotatorische Schwingungsbewegung der Aufsteckbürste 5 um die Längsachse 3 erzeugt werden, die durch einen Richtungspfeil 8 dargestellt ist sowie eine translatorische Schwingungsbewegung der Aufsteckbürste 5 quer zur Längsachse 3, die durch einen Richtungspfeil 9 dargestellt ist.

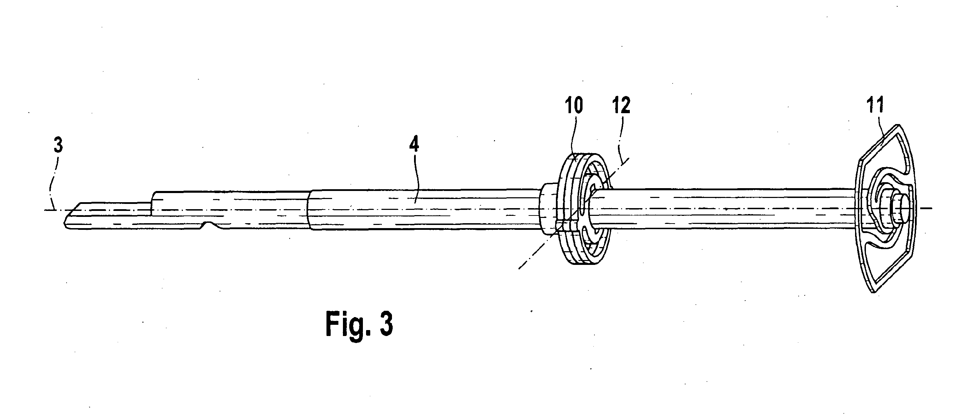

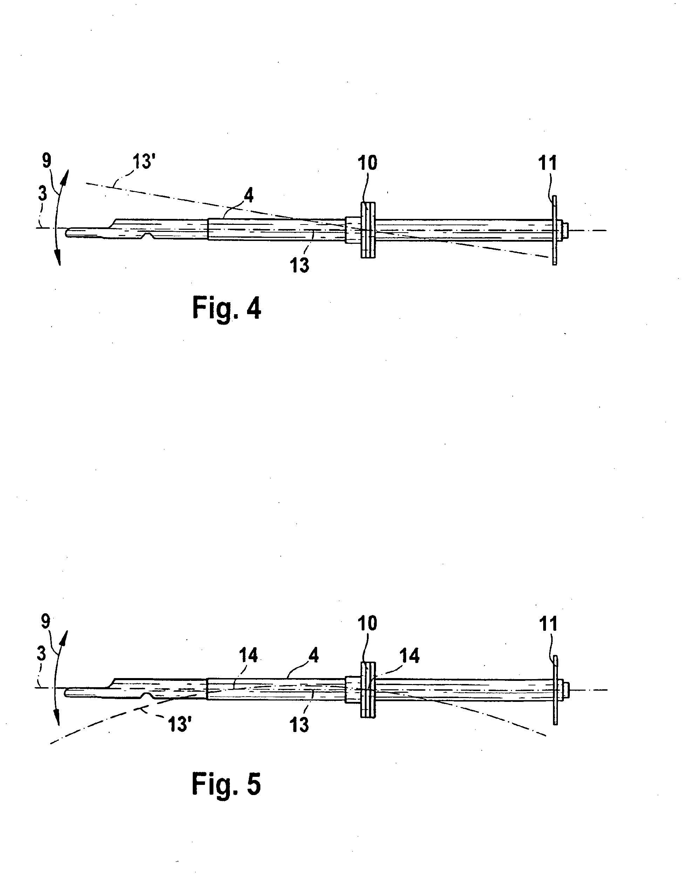

Fig. 3 zeigt ein Ausführungsbeispiel für die Lagerung der Welle 4 in perspektivischer Darstellung. Beim dargestellten Ausführungsbeispiel ist die Welle 4 mittels einer ersten Feder 10 und einer zweiten Feder 11 gelagert. Die erste Feder 10 ist axial zwischen den beiden Enden der Welle 4 angeordnet und ermöglicht eine Pendelbewegung der Welle 4 um eine Pendelachse 12, die durch die erste Feder 10 definiert wird und quer zur Längsachse 3 verläuft. Diese Pendelbewegung wird anhand von Fig. 4 näher erläutert.

Die zweite Feder 11 ist im Bereich des zum Aufnahmebereich für die Aufsteckbürste 5 entgegengesetzten axialen Endes der Welle 4 angeordnet und weist in einer Richtung parallel zur Pendelachse 12 eine hohe Steifigkeit und in einer Richtung senkrecht zur Pendelachse 12 und zur Längsachse 3 eine geringe Steifigkeit auf. Die zweite Feder 11 wirkt somit als eine zusätzliche Führung der Welle 4 bei der Pendelbewegung, indem sie Bewegungen parallel zur Pendelachse 12 unterdrückt und Bewegungen um die Pendelachse 12 herum zuläßt.

Fig. 4 zeigt die gemäß Fig. 3 gelagerte Welle 4 für einen ersten Schwingungszustand in Seitenansicht. Der erste Schwingungszustand zeichnet sich dadurch aus, daß die Welle 4 eine periodische Pendelbewegung um die Pendelachse 12 ausführt. In Fig. 4 sind zwei Momentaufnahmen dieser Pendelbewegung dargestellt. Eine erste Momentaufnahme bezieht sich auf einen Gleichgewichtszustand, in dem die Welle 4 verharren würde, wenn sie nicht zu einer Schwingungsbewegung angeregt werden würde. Für den Gleichgewichtszustand sind in Fig. 4 die Umrisse der Welle 4 und der beiden Federn 10 und 11 dargestellt. Während der Pendelbewegung nimmt die Welle 4 in periodischen Zeitabständen eine dem Gleichgewichtszustand entsprechende Position ein. Die Position der Welle 4 wird in Fig. 4 durch ihre Mittellinie veranschaulicht, wobei der Mittellinie im Gleichgewichtszustand ein Bezugszeichen 13 zugeordnet ist.

Weiterhin ist in Fig. 4 ein ausgelenkter Zustand dargestellt. Für den ausgelenkten Zustand ist in Fig. 4 nur die Mittellinie der Welle 4 wiedergegeben und mit einem Bezugszeichen 13' bezeichnet. Im ausgelenkten Zustand ist die Welle 4 gegenüber dem Gleichgewichtszustand um die Pendelachse 12 verkippt, so daß die Mittellinie 13' der Welle 4 im ausgelenkten Zustand und die Mittellinie 13 der Welle 4 im Gleichgewichtszustand einen Winkel miteinander einschließen. Dies bedeutet, daß die Auslenkung der Welle 4 aus der Ruheposition entlang der Welle 4 variiert und beidseits der Pendelachse 12 zum selben Zeitpunkt eine Auslenkung zu entgegengesetzten Seiten vorliegt. Unter Auslenkung ist dabei der Abstand eines Punktes auf der Welle 4 im ausgelenkten Zustand vom selben Punkt im Ruhezustand zu verstehen. Zusätzlich zur Ortsabhängigkeit der Auslenkung besteht während der Pendelbewegung auch eine Zeitabhängigkeit der Auslenkung, so daß die Auslenkung für eine feste Axialposition auf der Welle 4 zeitlich variiert. Die Orts- und Zeitabhängigkeit der Auslenkung kann auch bei andersartigen Bewegungsmustern als der vorstehend beschriebenen Pendelbewegung und bei einer andersartigen Ausbildung der Zahnbürste vorgesehen werden. Über die axiale Position der Pendelachse 12 und somit der ersten Feder 10 kann die Hebelwirkung der Welle 4 zwischen ihrem vom Elektromotor 1 angetriebenen Ende einerseits und ihrem Ende, das die Aufsteckbürste 5 aufnimmt andererseits variiert werden. Mit anderen Worten, durch die axiale Position der ersten Feder 10 wird das Übersetzungs- oder Untersetzungsverhältnis zwischen dem Elektromotor 1 und der Aufsteckbürste 5 vorgegeben.

Die vorstehend beschriebene Pendelschwingung stellt eine Grundschwingung der Welle 4 dar. Neben dieser Grundschwingung können auch höhere Eigenmoden angeregt werden. Die höheren Eigenmoden entsprechen jeweils einer Biegeschwingung in Form einer stehenden Welle 4. Ein Beispiel für eine derartige Biegeschwingung ist in Fig. 5 dargestellt.

Fig. 5 zeigt die gemäß Fig. 3 gelagerte Welle 4 für einen zweiten Schwingungszustand in Seitenansicht. Der zweite Schwingungszustand zeichnet sich dadurch aus, daß die Welle 4 eine erste Oberschwingung in Form der dargestellten Biegeschwingung ausführt. Die erste Oberschwingung weist zwei Schwingungsknoten 14 auf, in denen die Welle 4 in ihrer Gleichgewichtsposition verharrt. Außerhalb der Schwingungsknoten 14 variiert die Auslenkung der Welle 4 zeitlich. Zudem variiert die Auslenkung der Welle 4 außerhalb der Schwingungsknoten 14 infolge der Biegung zu einem gegebenen Zeitpunkt entlang der Welle 4.

Die erste Feder 10 ist vorzugsweise im Bereich eines der Schwingungsknoten 14 angeordnet. Dies hat zur Folge, daß die Biegeschwingung der Welle 4 durch die erste Feder 10 nicht behindert wird und über die erste Feder 10 kaum Vibrationen auf das nicht figürlich dargestellte Gehäuse der elektrischen Zahnbürste übertragen werden.

Über die Steifigkeit der Welle 4 und der Aufsteckbürste 5 kann Einfluß auf das Übersetzungsverhältnis der Bewegung zwischen dem angetriebenen Ende der Welle 4 und der Aufsteckbürste 5 genommen werden. Auf diese Weise läßt sich sowohl eine Wegübersetzung als auch eine Weguntersetzung realisieren.

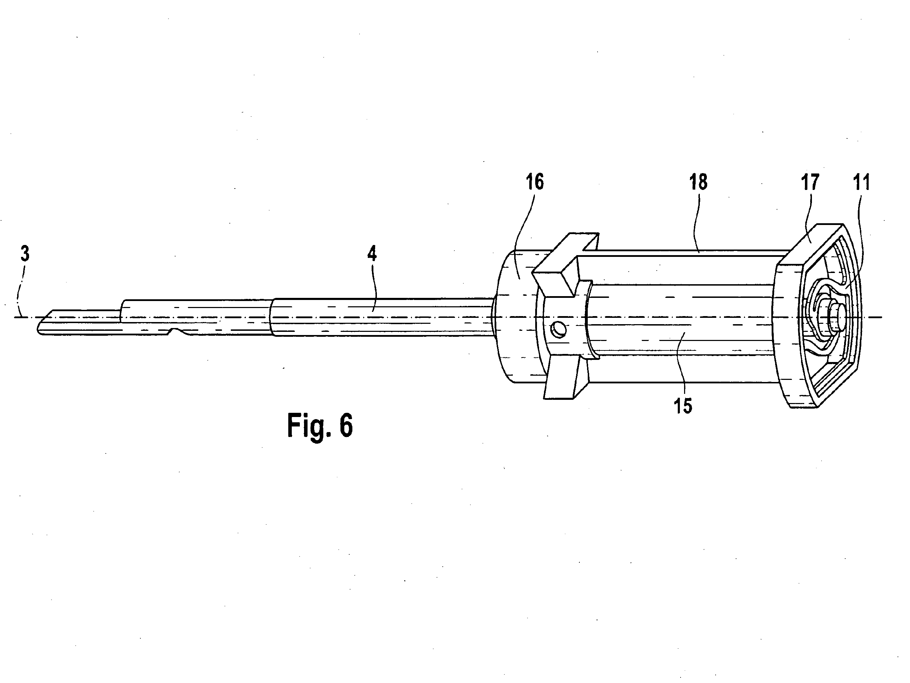

Fig. 6 zeigt ein Ausführungsbeispiel für einen Federträger 15 zur Aufnahme der ersten Feder 10 und der zweiten Feder 11 in perspektivischer Darstellung. Der Federträger 15 nimmt die erste Feder 10 in einem ersten Aufnahmerahmen 16 auf, dessen Form auf die erste Feder 10 abgestimmt ist und die zweite Feder 11 in einen zweiten Aufnahmerahmen 17, dessen Form auf die zweite Feder 11 abgestimmt ist. Die beiden Aufnahmerahmen 16 und 17 sind mittels parallel zur Längsachse 3 verlaufender Stege 18 starr miteinander verbunden.

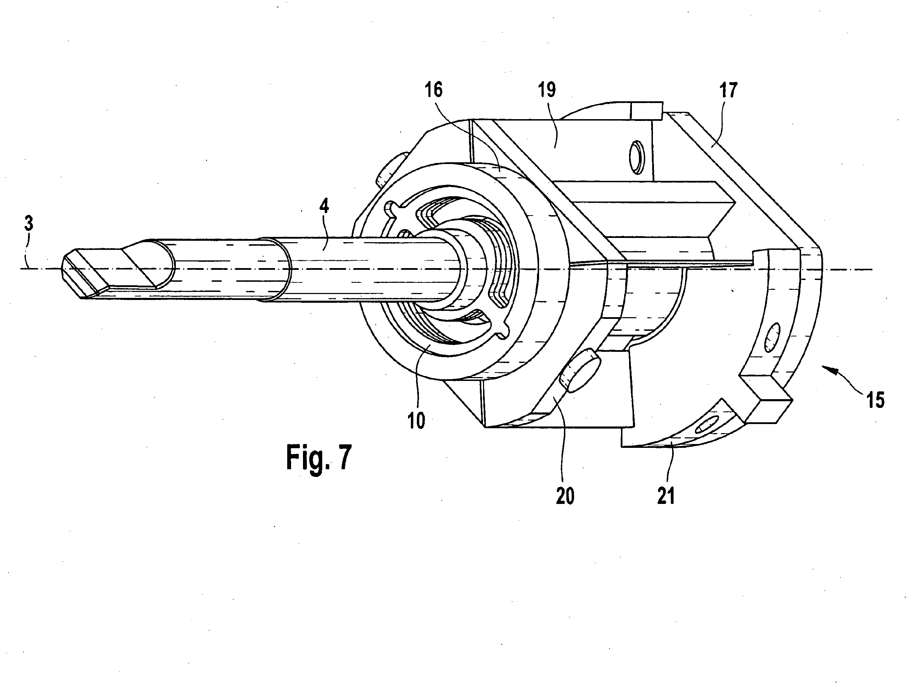

Fig. 7 zeigt ein Ausführungsbeispiel für das Schwingungssystem 2 in perspektivischer Darstellung. Das Schwingungssystem 2 weist den in Fig. 6 dargestellten Federträger 15 auf. In der Nähe des ersten Aufnahmerahmens 16 des Federträgers 15 sind vier rechteckig ausgebildete Blattfedern 19 mit je einem Ende am Federträger 15 angebracht. Beispielsweise sind die Blattfedern 19 jeweils an einem Ende zwischen dem Federträger 15 und einem Klemmstück 20 eingeklemmt. Die Längsseiten der Blattfedern 19 erstrecken sich bezogen auf die Welle 4 in Axialrichtung. Die Schmalseiten der Blattfedern 19 erstrecken sich bezogen auf die Welle 4 in Radialrichtung. Mit ihren freien Enden sind die Blattfedern 19 jeweils paarweise an einem Halteblock 21 befestigt. Eine derartige Anordnung der Blattfedern 19 unterbindet relative Bewegungen zwischen den Halteblöcken 21 und dem Federträger 15 parallel zur Axialrichtung der Welle 4 und parallel zur Radialrichtung der Welle 4. Ein Verdrehen des Federträgers 15 relativ zu den Halteblöcken 21 ist jedoch innerhalb gewisser Grenzen möglich.

Somit ermöglicht die vorstehend beschriebene Ausbildung des Schwingungssystems 2 zusätzlich zu der bereits im einzelnen erläuterten Pendel- bzw. Biegeschwingung der Welle 4 eine rotatorische Schwingung des Federträgers 15 inklusive der Welle 4 relativ zu den Halteblöcken 21 um die Längsachse 3. Die rotatorische Schwingung besitzt vorzugsweise eine andere Resonanzfrequenz als die Pendel- bzw. Biegeschwingung. Dadurch ist es möglich über die Wahl der Anregungsfrequenz relativ zu den Resonanzfrequenzen bevorzugt die Pendel- bzw. Biegeschwingung oder die rotatorische Schwingung anzuregen. Auch die bevorzugte Anregung der Pendelschwingung einerseits oder der Biegeschwingung andererseits kann über die Wahl der Anregungsfrequenz erfolgen, wenn die Pendelschwingung und die Biegeschwingung unterschiedliche Resonanzfrequenzen aufweisen. Durch eine Anregungsfrequenz zwischen den Resonanzfrequenzen kann eine kombinierte Schwingungsbewegung angeregt werden. Ebenso ist es auch möglich eine Anregung mit mehreren Frequenzanteilen vorzunehmen, die bevorzugt in der Nähe der jeweiligen Resonanzfrequenzen liegen und auf diese Weise eine kombinierte Schwingungsbewegung zu erzeugen.

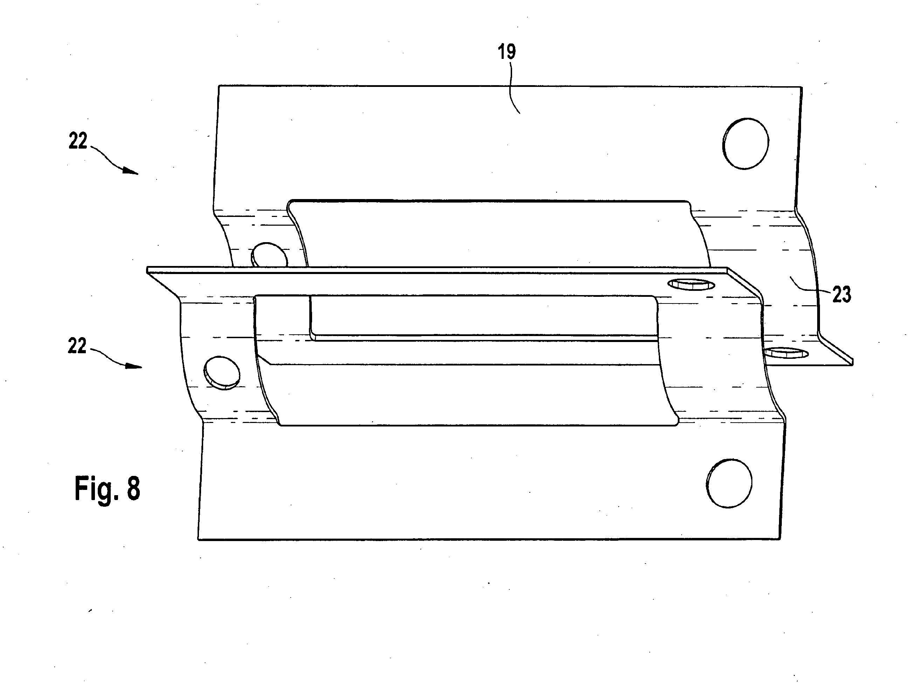

Fig. 8 zeigt ein Ausführungsbeispiel für einen Satz Blattfedermodule 22 in perspektivischer Ansicht. Die Blattfedermodule 22 können anstelle der in Fig. 7 dargestellten einzelnen Blattfedern 19 zur drehbeweglichen Fixierung des Federträgers 15 an den Halteblöcken 21 eingesetzt werden. Dabei ersetzt jedes Blattfedermodul 22 zwei Blattfedern 19. Die Blattfedermodule 22 sind jeweils als Stanz/Biegeteile ausgeführt, in die je zwei Blattfedern 19 integriert sind. Die beiden Blattfedern 19 sind an ihren Enden mittels je eines Bügels 23 miteinander verbunden. Die Bügel 23 sind einteilig mit den Blattfedern 19 ausgebildet.

Durch die Verwendung der Blattfedermodule 22 anstelle der Blattfedern 19 reduziert sich die Zahl der zu montierenden Bauteile um zwei. Außerdem wird die präzise Ausrichtung der Blattfern 19 vereinfacht. Dies führt dazu, daß der Montageaufwand reduziert wird.

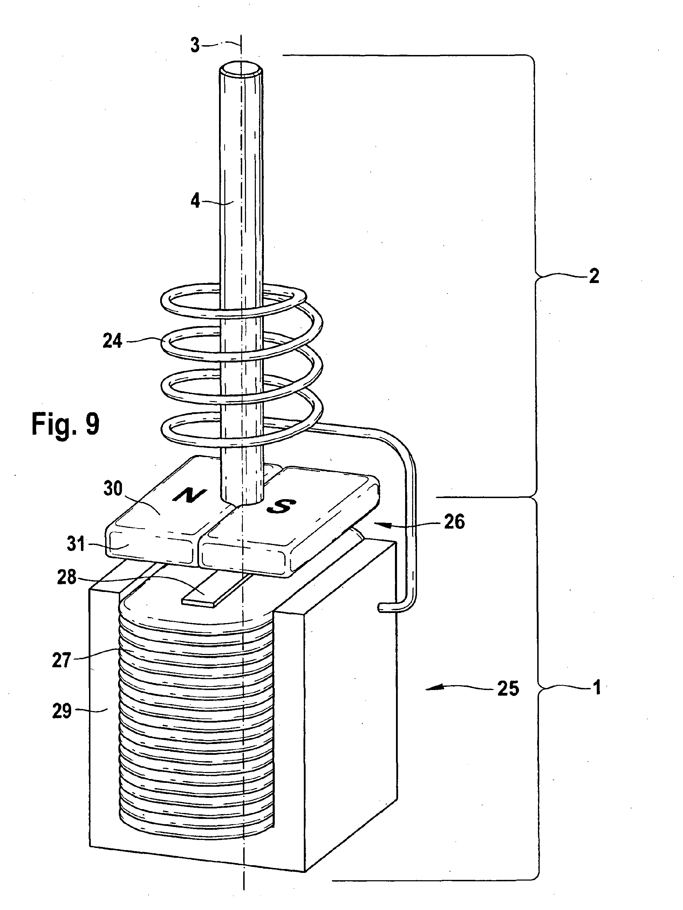

Fig. 9 zeigt eine erste Prinzipdarstellung des Elektromotors 1. In Fig. 9 sind weiterhin die Welle 4 und ein Federelement 24 eingezeichnet und dadurch das Schwingungssystem 2 angedeutet. Der Elektromotor 1 weist einen Stator 25 und einen Läufer 26 auf, die axial nebeneinander angeordnet sind.

Der Stator 25 weist eine Spule 27, einen Spulenkern 28 und ein Spulengehäuse 29 auf. Die Spule 27 ist um den Spulenkern 28 herum gewickelt und innerhalb des Spulengehäuses 29 angeordnet. Sowohl der Spulenkern 28 als auch das Spulengehäuse 29 sind aus ferromagnetischem Material hergestellt.

Der Läufer 26 weist eine Magnetanordnung 30 auf, die mechanisch mit der Welle 4 verbunden ist. Die Verbindung ist vorzugsweise starr ausgebildet. Beim Ausführungsbeispiel der Fig. 9 weist die Magnetanordnung 30 einen Permanentmagneten 31 auf, dessen Nord/Süd-Erstreckung quer zur Längserstreckung des Spulenkerns 28 verläuft. Ebenso können auch zwei Permanentmagnete 31 vorgesehen sein, deren Nord/Südrichtung jeweils parallel zur Längsachse 3 verläuft und die mit antiparalleler Polung nebeneinander angeordnet sind. Diese Substitutionsmöglichkeit besteht auch bei andersartig ausgebildeten Magnetanordnungen 30.

Bei einem Stromfluß durch die Spule 27 wird ein Magnetfeld erzeugt, dessen Richtung von der Stromrichtung in der Spule 27 abhängt. Durch die Einwirkung des Magnetfelds auf den Permanentmagneten 31 wird eine Magnetkraft parallel zur Nord/Süd-Erstreckung des Permanentmagneten 31 erzeugt und dadurch die Magnetanordnung 30 aus ihrer Gleichgewichtslage ausgelenkt. Das Federelement 24 erzeugt eine Rückstellkraft, die zur Gleichgewichtslage hin gerichtet ist. In der Gleichgewichtslage ist die Magnetanordnung 30 mittig zum Spulenkern 28 angeordnet. Durch periodisches Umpolen oder zumindest Ein- und Ausschalten des Spulenstroms vorzugsweise mit einer Frequenz in der Nähe der Resonanzfrequenz des Schwingungssystems 2, das auch die Magnetanordnung 30 mitumfaßt, wird das Schwingungssystem 2 zu den bereits beschriebenen Pendelschwingungen oder Biegeschwingungen angeregt. Eine rotatorische Schwingung wird nicht angeregt, da kein Drehmoment erzeugt wird.

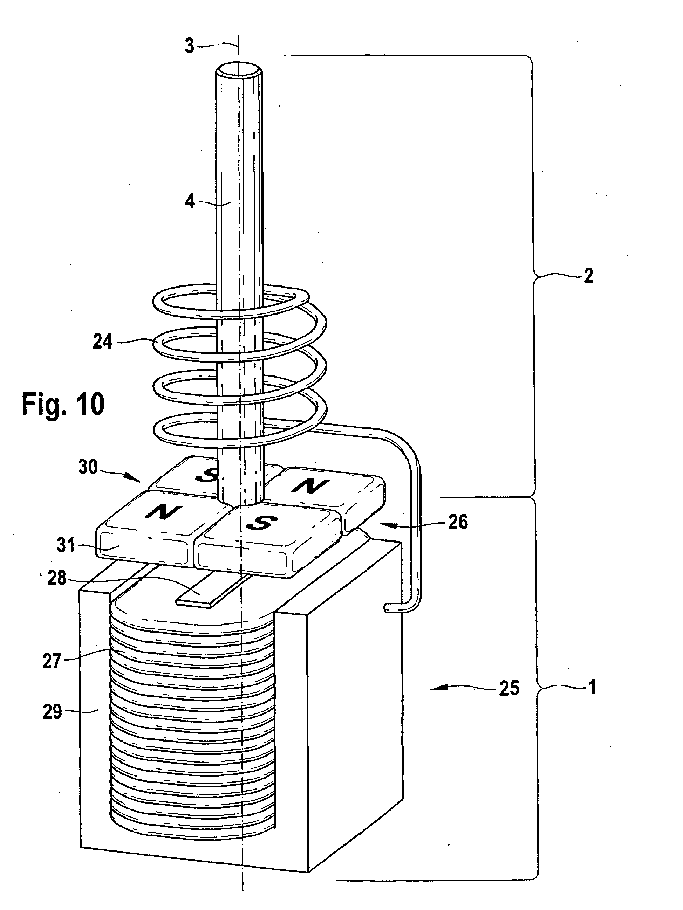

Fig. 10 zeigt eine zweite Prinzipdarstellung des Elektromotors 1. Die zweite Prinzipdarstellung unterscheidet sich von Fig. 9 hinsichtlich der Magnetanordnung 30. Anstelle eines einzigen Permanentmagneten 31 weist die Magnetanordnung 30 zwei mit antiparalleler Polung nebeneinander angeordnete Permanentmagnete 31 auf. Diese Orientierung der Permanentmagnete 31 hat zur Folge, daß durch die Einwirkung des von der Spule 27 erzeugten Magnetfelds auf die Magnetanordnung 30 ein Drehmoment erzeugt wird und dadurch die Magnetanordnung 30 aus der Gleichgewichtslage herausgedreht wird. In der Gleichgewichtslage sind die Nord/Süd-Erstreckungen der Permanentmagnete 31 in einem rechten Winkel zur Längserstreckung des Spulenkerns 28 orientiert. Das Federelement 24 erzeugt ein Rückmoment, das zur Gleichgewichtslage hin gerichtet ist. Durch eine periodische Änderung des von der Spule 27 erzeugten Magnetfelds, die durch eine entsprechende Änderung des Spulenstroms erzeugbar ist, kann das Schwingungssystem 2 zu einer rotatorischen Schwingung angeregt werden. Eine Anregung von Pendelschwingungen oder Biegeschwingungen erfolgt nicht, da ausschließlich Momente erzeugt werden.

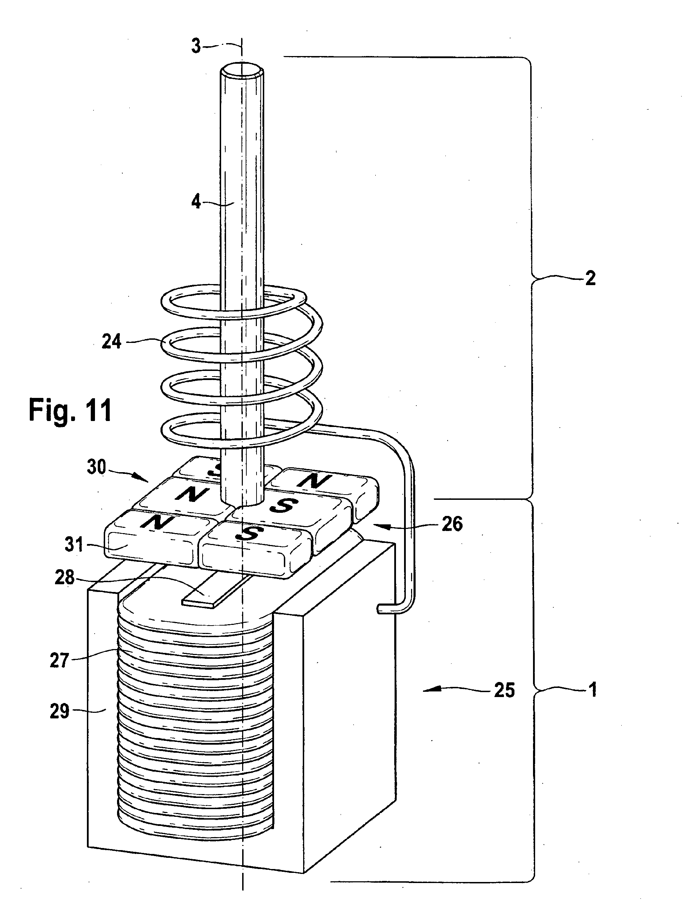

Fig. 11 zeigt eine dritte Prinzipdarstellung des Elektromotors 1. Bei der dritten Prinzipdarstellung weist der Läufer 26 eine Magnetanordnung 30 auf, die einer Kombination der Magnetanordnungen 30 gemäß der ersten und der zweiten Prinzipdarstellung entspricht. Dabei ist der Permanentmagnet 31 gemäß der ersten Prinzipdarstellung zwischen den beiden Permanentmagneten 31 gemäß der zweiten Prinzipdarstellung angeordnet. Die Einwirkung des von der Spule 27 erzeugten Magnetfeldes auf den mittleren Permanentmagneten 31 erzeugt eine Kraft; die Einwirkung des von der Spule 27 erzeugten Magnetfeldes auf die beiden äußeren Permanentmagnete 31 erzeugt ein Drehmoment. Somit ist sowohl eine Pendelschwingung bzw. Biegeschwingung als auch eine rotatorische Schwingung anregbar. Über die Wahl der Anregungsfrequenz relativ zur Resonanzfrequenz besteht die Möglichkeit, jeweils weit überwiegend eine Pendelschwingung, eine Biegeschwingung oder eine rotatorische Schwingung anzuregen. Ebenso ist es möglich, in einem gewünschten Amplitudenverhältnis eine Pendelschwingung bzw. Biegeschwingung einerseits und eine rotatorische Schwingung andererseits anzuregen. Ein gewünschtes Amplitudenverhältnis verschiedener Schwingungsarten läßt sich auch durch eine Überlagerung mehrerer Anregungsfrequenzen erreichen.

Die durch die Einwirkung des von der Spule 27 erzeugten Magnetfelds auf die Magnetanordnung 30 erzeugte Kraft ist maximal, wenn die Magnetanordnung 30 mittig über dem Spulenkern 28 positioniert ist, d. h. in der Gleichgewichtsposition. Wird die Magnetanordnung 30 durch eine äußere Kraft aus der Gleichgewichtsposition verschoben, so läßt die durch die Einwirkung des Magnetfelds erzeugte Kraft nach. Bei der äußeren Kraft kann es sich insbesondere um die Andruckkraft handeln, welcher die Aufsteckbürste 5 während des Zähneputzens ausgesetzt ist. Somit besteht die Möglichkeit, die Anregung der Pendel- bzw. Biegeschwingung ab einer vorgegebenen Andruckkraft zu deaktivieren.

Weiterhin ist es möglich, den Elektromotor 1 so abzuwandeln, daß die Magnetanordnung 30 im Gleichgewichtszustand außermittig zum Spulenkern 28 angeordnet ist. Bei dieser Abwandlung bewirkt eine zunehmende Andruckkraft der Aufsteckbürste 5 zunächst eine verstärkte Anregung der Pendel- bzw. Biegeschwingung. Wenn die Magnetanordnung 30 durch die Andruckkraft mittig zum Spulenkern 28 positioniert ist, erfolgt die maximale Anregung der Pendel- bzw. Biegeschwingung. Eine weitere Zunahme der Andruckkraft führt dazu, daß die Magnetanordnung 30 die zum Spulenkern 28 mittige Position wieder verläßt und demgemäß die Anregung der Pendel- bzw. Biegeschwingung wieder abnimmt.

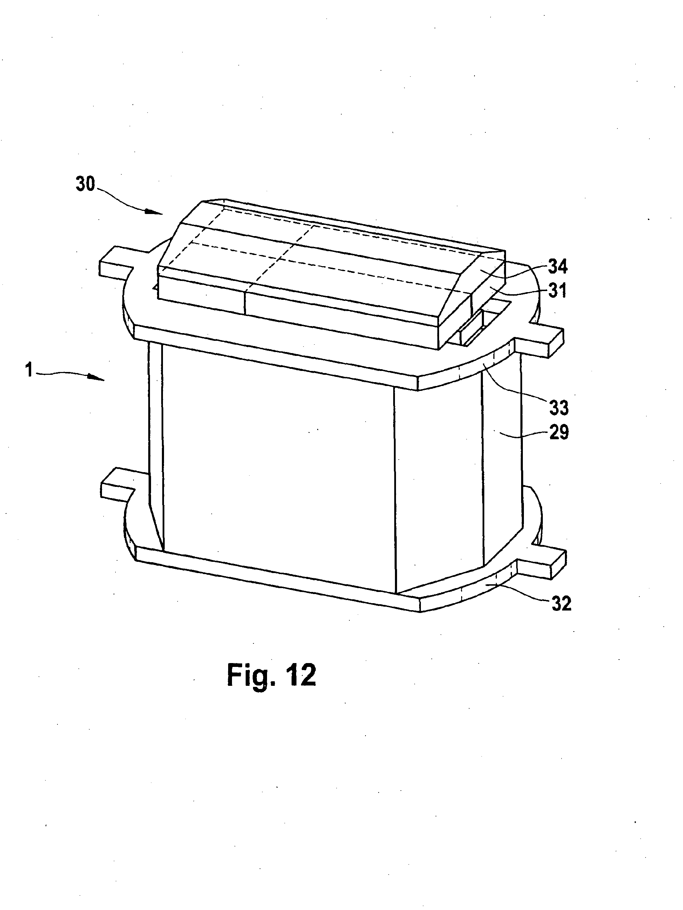

Fig. 12 zeigt ein Ausführungsbeispiel für den Elektromotor 1 in perspektivischer Darstellung. Beim dargestellten Ausführungsbeispiel ist das Spulengehäuse 29 auf einer Axialseite mit einer Abschlußplatte 32 aus einem ferromagnetischen Material verschlossen. Über die Abschlußplatte 32 wird eine Verbindung zwischen dem Spulenkern 28 und dem Spulengehäuse 29 ausgebildet, über die ein magnetischer Fluß geleitet werden kann. Auf der anderen Axialseite des Spulengehäuses 29 ist eine Polschuhanordnung 33 vorgesehen, über die das von der Spule 27 erzeugte Magnetfeld austritt. Die Magnetanordnung 30 ist unmittelbar axial benachbart zur Polschuhanordnung 33 angeordnet und weist einen Träger 34 vorzugsweise aus einem ferromagnetischen Material zur Aufnahme der Permanentmagnete 31 auf. Das Spulengehäuse 29 kann auch so ausgebildet werden, daß es sich über die Magnetanordnung 30 hinaus erstreckt. Auf diese Weise lassen sich die magnetischen Streufelder sehr gering halten.

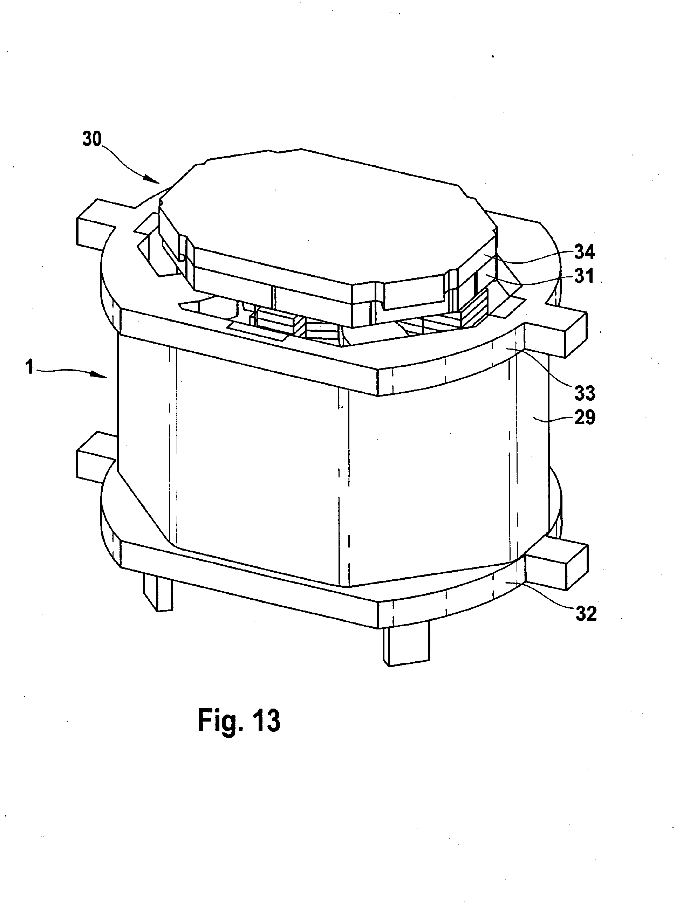

Fig.13 zeigt ein weiteres Ausführungsbeispiel für den Elektromotor 1 in perspektivischer Darstellung. Dieses Ausführungsbeispiel unterscheidet sich von dem in Fig. 12 dargestellten Ausführungsbeispiel im wesentlichen hinsichtlich der Magnetanordnung 30 und der Polschuhanordnung 33. Wie im folgenden noch näher erläutert wird, sind die Polschuhanordnung 33 und die Magnetanordnung 30 wesentlich komplexer ausgebildet als beim Ausführungsbeispiel der Fig. 12.

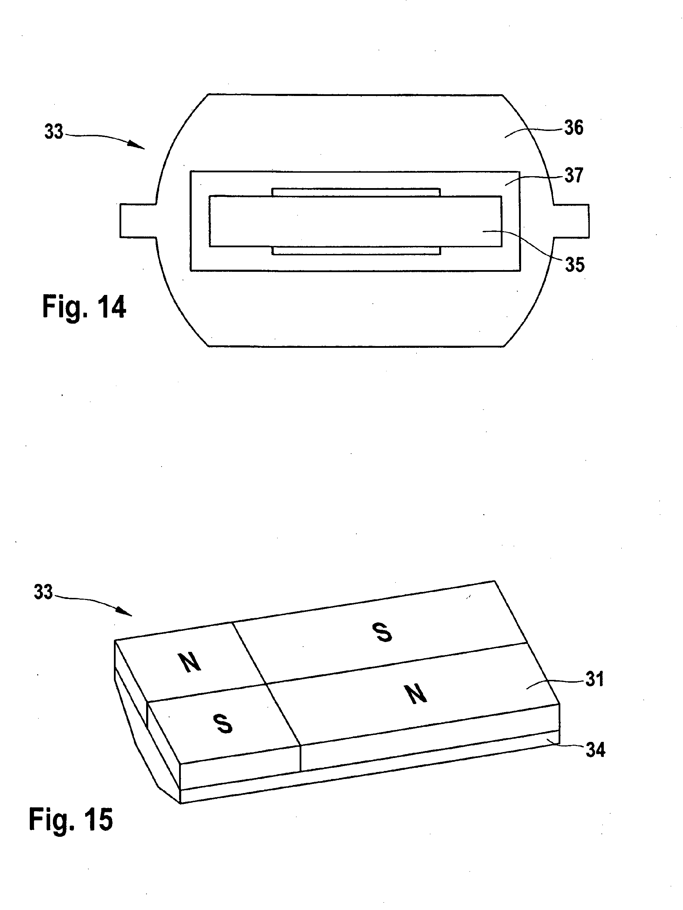

Fig. 14 zeigt die Polschuhanordnung 33 des in Fig. 12 dargestellten Ausführungsbeispiels des Elektromotors 1 in Aufsicht. Die Polschuhanordnung 33 weist ein inneres Polschuhelement 35 und ein äußeres Polschuhelement 36 auf, das zusammen mit dem inneren Polschuhelement 35 in einer Ebene angeordnet ist und das innere Polschuhelement 35 radial umschließt. Das innere Polschuhelement 35 ist im wesentlichen rechteckig ausgebildet. Das äußere Polschuhelement 36 weist eine auf das Spulengehäuse 29 abgestimmte Form auf und steht radial über das Spulengehäuse 29 über. In seinem Innenbereich weist das äußere Polschuhelement 36 eine Ausnehmung 37 auf, deren Form auf das innere Polschuhelement 35 abgestimmt ist und demgemäß einen rechteckigen Querschnitt aufweist. In der Ausnehmung 37 ist das innere Polschuhelement 35 angeordnet. Das innere Polschuhelement 35 ist im eingebauten Zustand am Spulenkern 28 befestigt; das äußere Polschuhelement 36 ist im eingebauten Zustand am Spulengehäuse 29 befestigt. Bis auf einen zwischen dem inneren Polschuhelement 35 und dem äußeren Polschuhelement 36 bestehenden Freiraum ist das Spulengehäuse 29 durch die Polschuhanordnung 33 verschlossen.

Fig. 15 zeigt die Magnetanordnung 30 des in Fig. 12 dargestellten Ausführungsbeispiels des Elektromotors 1 in einer perspektivischen Darstellung. Die Perspektive ist dabei so gewählt, daß die im eingebauten Zustand der Polschuhanordnung 33 zugewandte Seite der Magnetanordnung 30 sichtbar ist. Die Magnetanordnung 30 weist zwei Permanentmagnete 31 auf, die mit antiparalleler Polung nebeneinander auf dem Träger 34 angeordnet sind. Parallel zu Ihrer Nord/Süd-Erstreckung weisen die Permanentmagnete 31 die gleichen Abmessungen auf. Quer zur Nord/Süd-Erstreckung weist der in Fig. 15 rechts dargestellte Permanentmagnet 31 doppelt so große Abmessungen auf wie der in Fig. 15 links dargestellt Permanentmagnet 31. Die unterschiedlichen Abmessungen der Permanentmagnete 31 haben zur Folge, daß auf die Magnetanordnung 30 bei einer Bestromung der Spule 27 sowohl eine Kraft als auch ein Drehmoment ausgeübt wird. Auf diese Weise kann, wie anhand von Fig. 11 im einzelnen beschrieben, eine Pendel- bzw. Biegeschwingung und eine rotatorische Schwingung der Magnetanordnung 30 inklusive der damit verbundenen Komponenten erzeugt werden.

Alternativ zur Verwendung mehrerer Permanentmagnete 31 kann auch ein einziger Permanentmagnet 31 mit mehreren unterschiedlich magnetisierten Bereichen verwendet werden. Dies gilt auch für andersartig ausgebildete Magnetanordnungen 30 als in Fig. 15 dargestellt.

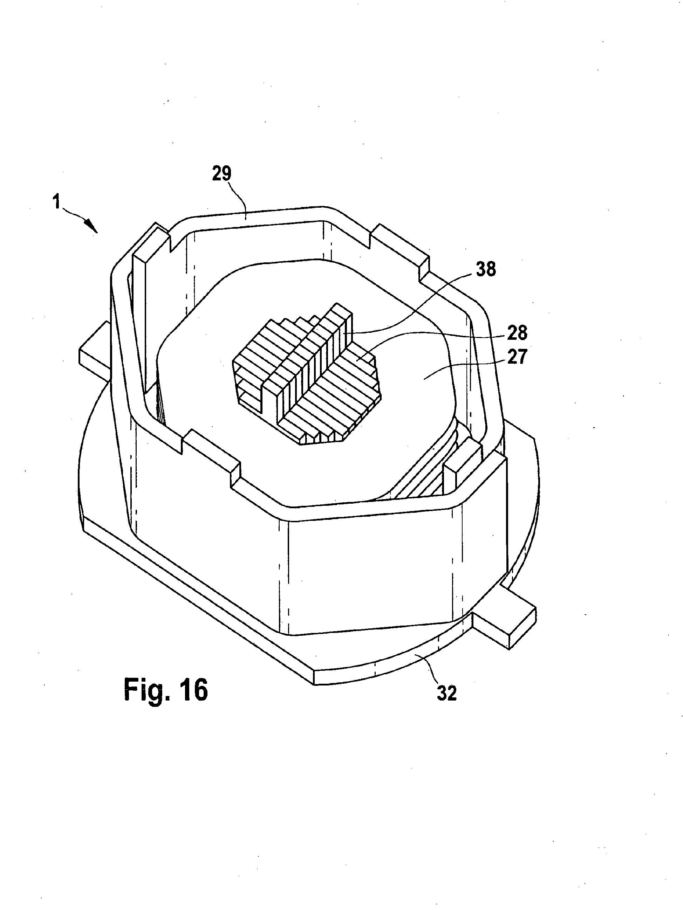

Fig. 16 zeigt das in Fig. 13 dargestellte Ausführungsbeispiel des Elektromotors 1 ohne die Magnetanordnung 30 und ohne die Polschuhanordnung 33 in perspektivischer Darstellung. Der dargestellte Spulenkern 28 ist achteckig ausgebildet und weist auf der Axialseite der Polschuhanordnung 33 einen axialen Fortsatz 38 mit einem rechteckigen Querschnitt auf. Die Spule 27 umschließt den Spulenkern 28 mit ungefähr konstantem Querschnitt. Auch das Spulengehäuse 29 ist im Querschnitt achteckig ausgebildet, so daß lediglich ein geringer Abstand zwischen der Spule 27 und dem Spulengehäuse 29 ausgebildet ist und die Spule 27 zusammen mit dem Spulenkern 28 das Spulengehäuse 29 fast vollständig ausfüllt.

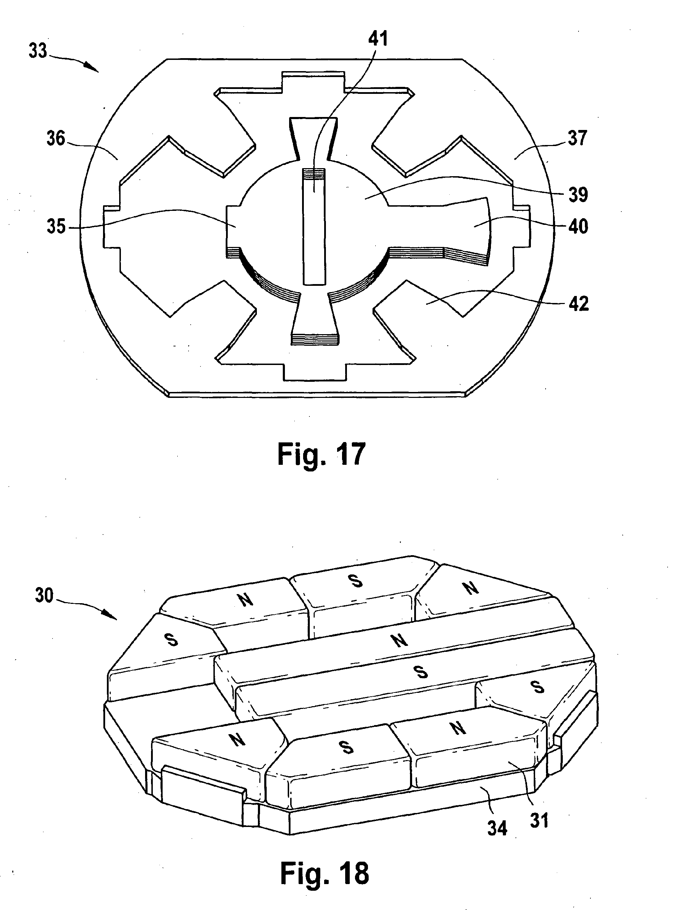

Fig. 17 zeigt die Polschuhanordnung 33 des in Fig. 13 dargestellten Ausführungsbeispiels des Elektromotors 1 in perspektivischer Darstellung. Analog zu Fig. 14 weist die Polschuhanordnung 33 wiederum ein inneres Polschuhelement 35 und ein äußeres Polschuhelement 36 auf, das das innere Polschuhelement 35 radial umschließt. Das innere Polschuhelement 35 ist in der Ausnehmung 37 des äußeren Polschuhelements 36 angeordnet und als eine Kreisscheibe 39 mit vier radialen Fortsätzen 40 ausgebildet, die sich jeweils paarweise gegenüberliegen und unterschiedliche radiale Erstreckungen aufweisen. Im Bereich des Zentrums der Kreisscheibe 39 weist das innere Polschuhelement 35 eine rechteckige Lochung 41 auf, die auf die Außenkontur des axialen Fortsatzes 38 des Spulenkerns 28 abgestimmt ist, so daß das innere Polschuhelement 35 auf den axialen Fortsatz 38 des Spulenkerns 28 aufgeschoben werden kann. Für das in Fig. 14 dargestellte Ausführungsbeispiel der Polschuhanordnung 33 kann eine ähnliche Befestigungsart gewählt werden.

Die Ausnehmung 37 des äußeren Polschuhelements 36 ist auf das innere Polschuhelement 35 abgestimmt und weist zwei zueinander senkrechte Symmetrieebenen auf, die sich im Zentrum der Ausnehmung 37 schneiden. Dabei verfügt das äußere Polschuhelement 36 über vier in die Ausnehmung 37 radial einwärts ragende Vorsprünge 42, die gegen die radialen Fortsätze 40 des inneren Polschuhelements 35 um 45° verdreht sind.

Fig. 18 zeigt die Magnetanordnung 30 des in Fig. 13 dargestellten Ausführungsbeispiels des Elektromotors 1 in einer perspektivischen Darstellung. Analog zu Fig. 15 weist auch die Magnetanordnung 30 der Fig. 18 mehrere Permanentmagnete 31 auf, die auf dem Träger 34 angeordnet sind. Die Anordnung der Permanentmagnete 31 hat dabei die Form zweier in einem Abstand mit entgegengesetzter Polung einander gegenüberliegender Halbschalen, zwischen denen ein rechteckig geformter Permanentmagnet 31 angeordnet ist. Mittels der in Fig. 17 dargestellten Polschuhanordnung 33 können bei einem Stromfluß durch die Spule 27 auf die in Fig. 18 dargestellte Magnetanordnung 30 eine Kraft und ein Drehmoment ausgeübt werden. Über die Konfiguration der Permanentmagnete 31 kann vorgegeben werden, welche Teilbereiche der Magnetanordnung 30 der Erzeugung der Kraft und welche Teilbereiche der Erzeugung des Drehmoments dienen.

Das vorstehend beschriebene Antriebsprinzip kann auch in andersartig ausgebildeten elektrischen Zahnbürsten eingesetzt werden.

### Bezugszeichenliste

- 1: Elektromotor
- 2: Schwingungssystem
- 3: Längsachse
- 4: Welle
- 5: Aufsteckbürste
- 6: Abflachung
- 7: Vertiefung
- 8: Richtungspfeil
- 9: Richtungspfeil
- 10: erste Feder
- 11: zweite Feder
- 12: Pendelachse
- 13: Mittellinie der Welle im Gleichgewichtszustand
- 13': Mittellinie der Welle im ausgelenkten Zustand
- 14: Schwingungsknoten
- 15: Federträger
- 16: erster Aufnahmerahmen
- 17: zweiter Aufnahmerahmen
- 18: Steg
- 19: Blattfeder
- 20: Klemmstück
- 21: Halteblock
- 22: Blattfedermodul
- 23: Bügel
- 24: Federelement
- 25: Stator
- 26: Läufer
- 27: Spule
- 28: Spulenkern
- 29: Spulengehäuse
- 30: Magnetanordnung
- 31: Permanentmagnet
- 32: Abschlußplatte
- 33: Polschuhanordnung
- 34: Träger
- 38: axialer Fortsatz
- 35: inneres Polschuhelement
- 36: äußeres Polschuhelement
- 37: Ausnehmung
- 39: Kreisscheibe
- 40: radialer Fortsatz
- 41: Lochung
- 42: Vorsprung

## Patentansprüche

1. Antriebsvorrichtung zum Antreiben eines Bürstenelements (5) einer elektrischen Zahnbürste, mit
- einer ersten Antriebskomponente (25) zur Erzeugung eines Magnetfelds,
- einer zweiten Antriebskomponente (26), die durch Einwirkung des Magnetfelds sowohl translatorisch als auch rotatorisch antreibbar ist,
- einem aus einer vorgegebenen Position auslenkbaren Übertragungselement (4) zur Übertragung einer translatorischen und einer rotatorischen Bewegung der zweiten Antriebskomponente (26) entlang einer Längsachse (3) des Übertragungselements (4) auf das Bürstenelement (5), wobei die Auslenkung des Übertragungselements (4) aus der vorgegebenen Position entlang der Längsachse (3) des Übertragungselements (4) variiert
**dadurch gekennzeichnet, dass** die zweite Antriebskomponente (26) axial neben der ersten Antriebskomponente (25) angeordnet ist.

2. Antriebsvorrichtung nach Anspruch 1, **dadurch gekennzeichnet, dass** wenigstens eine axiale Stelle (12, 14) des Übertragungselements (4) bei der Übertragung der translatorischen und der rotatorischen Bewegung der zweiten Antriebskomponente (26) ausschließlich eine rotatorische Bewegung ausführt.

3. Antriebsvorrichtung nach einem der vorhergehenden Ansprüche, **dadurch gekennzeichnet, dass** die Auslenkung des Übertragungselements (4) aus der vorgegebenen Position zur gleichen Zeit innerhalb eines ersten Bereichs entlang der Längsachse (3) des Übertragungselements (4) eine erste Richtung und innerhalb eines zweiten Bereichs entlang der Längsachse (3) des Übertragungselements (4) eine zur ersten Richtung entgegen gesetzte zweite Richtung aufweist.

4. Antriebsvorrichtung nach einem der vorhergehenden Ansprüche, **dadurch gekennzeichnet, dass** das Übertragungselement (4) zu einer translatorischen und zu einer rotatorischen Schwingung anregbar ist.

5. Antriebsvorrichtung nach Anspruch 4, **dadurch gekennzeichnet, dass** die translatorische und die rotatorische Schwingung unterschiedliche Resonanzfrequenzen aufweisen.

6. Antriebsvorrichtung nach einem der Ansprüche 4 oder 5, **dadurch gekennzeichnet, dass** wenigstens eine Aufhängung (10, 11, 15) zur Unterstützung des Übertragungselements (4) vorgesehen ist, welche die rotatorische und/oder die translatorische Schwingung des Übertragungselements (4) ermöglicht.

7. Antriebsvorrichtung nach Anspruch 6, **dadurch gekennzeichnet, dass** für die rotatorische und die translatorische Schwingung des Übertragungselements (4) unterschiedliche Aufhängungen (10, 11, 15) vorgesehen sind.

8. Antriebsvorrichtung nach einem der vorhergehenden Ansprüche, **dadurch gekennzeichnet, dass** das Übertragungselement (4) einen Koppelbereich (6, 7) zum Ankoppeln des Bürstenelements (5) aufweist.

9. Antriebsvorrichtung nach einem der vorhergehenden Ansprüche, **dadurch gekennzeichnet, dass** das Übertragungselement (4) drehfest mit der zweiten Antriebskomponente (26) verbunden ist.

10. Antriebsvorrichtung nach einem der vorhergehenden Ansprüche, **dadurch gekennzeichnet, dass** das Übertragungselement (4) starr mit der zweiten Antriebskomponente (26) verbunden ist.

11. Antriebsvorrichtung nach einem der vorhergehenden Ansprüche, **dadurch gekennzeichnet, dass** die zweite Antriebskomponente (26) wenigstens einen Permanentmagneten (31) aufweist.

12. Elektrische Zahnbürste mit einer Antriebsvorrichtung zum Antreiben eines Bürstenelements (5), **dadurch gekennzeichnet, dass** die Antriebsvorrichtung gemäß einem der vorhergehenden Ansprüche ausgebildet ist.

## Claims

1. A drive means for driving a brush element (5) of an electric toothbrush, with
- a first drive component (25) for creating a magnetic field,
- a second drive component (26), which, due to the effect of the magnetic field, can be driven both translationally and rotationally,
- a transmission element (4), able to be displaced from a predetermined position, for transferring a translational and a rotatory movement of the second drive component (26) along a longitudinal axis (3) of the transmission element (4) to the brush element (5), wherein the displacement of the transmission element (4) from the said predetermined position along the longitudinal axis (3) of the transmission element (4) varies;
**characterized in that** the second drive component (26) is disposed axially next to the first drive component (25).

2. The drive means according to claim 1, **characterized in that** at least one axial location (12, 14) of the transmission element (4) performs only a rotatory movement in the transmission of the translational and the rotatory movement of the second drive component (26).

3. The drive means according to one of the preceding claims, **characterized in that** the displacement of the transmission element (4) from the aforementioned predetermined position is in a first direction within a first region along the longitudinal axis (3) of the transmission element (4) and, at the same time, in a second direction opposite to the first direction within a second region along the longitudinal axis (3) of the transmission element (4).

4. The drive means according to one of the preceding claims, **characterized in that** the transmission element (4) can be induced to execute a translational and a rotatory oscillation.

5. The drive means according to Claim 4, **characterized in that** the translational and the rotatory oscillation have different resonance frequencies.

6. The drive means according to Claim 4 or 5, **characterized in that** at least one mounting (10, 11, 15) is provided to support the transmission element (4), which enables the rotatory and/or the translational oscillation of the transmission element (4).

7. The drive means according to Claim 6, **characterized in that** different mountings (10, 11, 15) are provided for the rotatory and the translational oscillation of the transmission element (4).

8. The drive means according to one of the preceding claims, **characterized in that** the transmission element (4) has a coupling region (6, 7), for connecting the brush element (5).

9. The drive means according to one of the preceding claims, **characterized in that** the transmission element (4) is connected to the second drive component (26) in a rotationally fixed manner.

10. The drive means according to one of the preceding claims, **characterized in that** the transmission element (4) is rigidly connected to the second drive component (26).

11. The drive means according to one of the preceding claims, **characterized in that** the second drive component (26) has at least one permanent magnet (31).

12. An electric toothbrush with a drive means for driving a brush element (5), **characterized in that** the drive means is designed according to one of the preceding Claims.

## Revendications

1. Dispositif d'entraînement pour entraîner un élément de brosse (5) d'une brosse à dents électrique, présentant
- un premier composant d'entraînement (25) pour générer un champ magnétique,
- un deuxième composant d'entraînement (26), qui peut être entraîné en translation ainsi qu'en rotation sous l'effet du champ magnétique,
- un élément de transmission (4) pouvant être dévié à partir d'une position prédéfinie pour transmettre un mouvement de translation et un mouvement de rotation du deuxième composant d'entraînement (26) le long d'un axe longitudinal (3) de l'élément de transmission (4) à l'élément de brosse (5), la déviation de l'élément de transmission (4) à partir de la position prédéfinie variant le long de l'axe longitudinal (3) de l'élément de transmission (4),
**caractérisé en ce que** le deuxième composant d'entraînement (26) est disposé axialement à côté du premier composant d'entraînement (25).

2. Dispositif d'entraînement selon la revendication 1, **caractérisé en ce qu'**au moins une position axiale (12, 14) de l'élément de transmission (4) exécute exclusivement un mouvement de rotation lors de la transmission du mouvement de translation et de rotation du deuxième composant d'entraînement (26).

3. Dispositif d'entraînement selon l'une quelconque des revendications précédentes, **caractérisé en ce que** la déviation de l'élément de transmission (4) à partir de la position prédéfinie présente en même temps, dans une première zone le long de l'axe longitudinal (3) de l'élément de transmission (4), une première direction et, dans une deuxième zone le long de l'axe longitudinal (3) de l'élément de transmission (4), une deuxième direction opposée à la première direction.

4. Dispositif d'entraînement selon l'une quelconque des revendications précédentes, **caractérisé en ce que** l'élément de transmission (4) peut être activé en une oscillation en translation et en une oscillation en rotation.

5. Dispositif d'entraînement selon la revendication 4, **caractérisé en ce que** l'oscillation en translation et l'oscillation en rotation présentent des fréquences de résonance différentes.

6. Dispositif d'entraînement selon l'une quelconque des revendications 4 ou 5, **caractérisé en ce qu'**il existe au moins une suspension (10, 11, 15) pour soutenir l'élément de transmission (4), qui permet l'oscillation en rotation et/ou l'oscillation en translation de l'élément de transmission (4).

7. Dispositif d'entraînement selon la revendication 6, **caractérisé en ce que** des suspensions (10, 11, 15) différentes sont prévues pour l'oscillation en rotation et l'oscillation en translation de l'élément de transmission (4).

8. Dispositif d'entraînement selon l'une quelconque des revendications précédentes, **caractérisé en ce que** l'élément de transmission (4) présente une zone d'accouplement (6, 7) pour accoupler l'élément de brosse (5).

9. Dispositif d'entraînement selon l'une quelconque des revendications précédentes, **caractérisé en ce que** l'élément de transmission (4) est relié de manière solidaire en rotation au deuxième composant d'entraînement (26).

10. Dispositif d'entraînement selon l'une quelconque des revendications précédentes, **caractérisé en ce que** l'élément de transmission (4) est relié de manière fixe au deuxième composant d'entraînement (26).

11. Dispositif d'entraînement selon l'une quelconque des revendications précédentes, **caractérisé en ce que** le deuxième composant d'entraînement (26) présente au moins un aimant permanent (31).

12. Brosse à dents électrique présentant un dispositif d'entraînement pour entraîner un élément de brosse (5), **caractérisé en ce que** le dispositif d'entraînement est réalisé selon l'une quelconque des revendications précédentes.
